# EUROPÄISCHE PATENTSCHRIFT

(11) **EP 1 567 020 B1**
(45) Veröffentlichungstag und Bekanntmachung des Hinweises auf die Patenterteilung: **07.01.2009**
(21) Anmeldenummer: 03775323.3
(22) Anmeldetag: 07.11.2003
(51) Int. Cl.: A23L 1/221, B01D 11/04

(54) **VERFAHREN ZUR SELEKTIVEN ABTRENNUNG VON FLÜCHTIGEN AROMASTOFFEN AUS EINPHASIGEN, (HALB-)FLÜSSIGEN AUSGANGSMATERIALIEN MIT EINEM FETT- UND/ODER ÖL-GEHALT 20GEW.-%**
METHOD FOR THE SELECTIVE SEPARATION OF VOLATILE FLAVORINGS FROM MONOPHASE, (SEMI)LIQUID STARTING MATERIALS HAVING A FAT CONTENT AND/OR OIL CONTENT OF = 20 PERCENT BY WEIGHT
PROCEDE DE SEPARATION SELECTIVE D'AROMES VOLATILS A PARTIR DE MATIERES DE DEPART MONOPHASES (SEMI-)LIQUIDES AYANT UNE TENEUR EN GRAISSE ET/OU HUILE = 20 % EN POIDS

(30) Priorität: 09.11.2002 DE 10252168
(43) Veröffentlichungstag der Anmeldung: 31.08.2005
(73) Patentinhaber: Evonik Degussa GmbH, 45128 Essen (DE)
(72) Erfinder: WIESMÜLLER, Johann, 84518 Garching (DE); SCHÜTZ, Erwin, 83308 Trostberg (DE); ZOBEL, Rudolf, 97348 Willanzheim (DE)
(74) Vertreter: Böhm, Brigitte
(86) Internationale Anmeldenummer: PCT/EP2003/012466
(87) Internationale Veröffentlichungsnummer: WO 2004/043168

(56) Entgegenhaltungen:
- EP-A- 0 041 723
- EP-A- 0 639 551
- EP-A- 0 786 513
- WO-A-01/28650
- FR-A- 2 505 868
- PT-B- 101 590
- US-A- 4 560 513
- US-A- 4 749 522
- US-A- 5 855 786
- DATABASE WPI Section Ch, Week 198625 Derwent Publications Ltd., London, GB; Class D13, AN 1986-157844 XP002271321 & JP 61 088853 A (SUNTORY LTD), 7. Mai 1986 (1986-05-07)
- DATABASE WPI Section Ch, Week 199522 Derwent Publications Ltd., London, GB; Class D13, AN 1995-166484 XP002271322 & JP 07 088303 A (LION CORP), 4. April 1995 (1995-04-04)
- DATABASE WPI Section Ch, Week 199234 Derwent Publications Ltd., London, GB; Class D16, AN 1992-281403 XP002271323 & JP 04 193304 A (KISO KASEI SANGYO KK), 13. Juli 1992 (1992-07-13)
- PATENT ABSTRACTS OF JAPAN vol. 1999, no. 05, 31. Mai 1999 (1999-05-31) & JP 11 033087 A (SHIMADZU CORP), 9. Februar 1999 (1999-02-09)

## Beschreibung

Gegenstand der vorliegenden Erfindung ist Verfahren zur selektiven Abtrennung von flüchtigen Aromastoffen aus einphasigen, flüssigen und/oder hallflüssigen Ausgangsmaterialien mit einem Fett- und/oder Öl-Gehalt ≤ 20 Gew.-%.

Die moderne Lebensmitteltechnologie bedient sich vielfältiger Verfahren zur Bearbeitung von Lebensmittelmitteln, um dem Verbraucher zeitgemäße und den geänderten Ernährungsgewohnheiten entsprechende Produkte anbieten zu können. Bei einigen Verfahrensschritten wird das ursprüngliche Aroma der Ausgangsstoffe aber technologisch verändert und auch oftmals negativ beeinflusst, weil insbesondere wertgebende Aromastoffe entfernt werden. Da jedoch gerade die Sensorik der Produkte ein entscheidendes Qualitätskriterium darstellt, ist die Lebensmitteltechnologie bestrebt, diese verfahrenstechnisch bedingte Beeinträchtigung der Produkte durch den gezielten Zusatz von Aromastoffen auszugleichen. Durch das zunehmende kritische Verbraucherdenken wird hierfür vor allem natürlichen Aromastoffen, die aus natürlichen Quellen gewonnen werden, der Vorzug vor naturidentischen oder gar künstlichen Aromastoffen gegeben.

Aus technologischer Sicht erweist sich die Gewinnung von Aromen aus Naturstoffen allerdings oftmals sehr problematisch, weil zum einen der eigentliche typische Sinneseindruck durch das Zusammenwirken einer Vielzahl von Einzelverbindungen bestimmt wird, zum anderen aber viele Aromakomponenten Verbindungen sind, die prozesstechnisch bedingt und insbesondere durch eine thermische Belastung zerstört oder aufgrund ihrer hohen Flüchtigkeit ungewollt entfernt werden.

Diese Problematik ist insbesondere bei der Gewinnung von Aromen aus fett- oder ölhaltigen Naturstoffen sehr ausgeprägt. Zusätzlich wird bei einem Teil dieser Rohstoffe angestrebt, Aromafraktionen zu gewinnen, die möglichst wenig Fett- und/oder Öl-Anteile enthalten, wie es insbesondere für die Herstellung von zum Teil wasserlöslichen Instantzubereitungen, wie z.B. Instantkaffee oder Produkten mit einem reduzierten Fett-/Öl-Gehalt, sogenannten Light-Produkten, unabdingbare Vorraussetzung ist.

Zur Gewinnung von Aromen aus fett- und ölhaltigen Naturstoffen sind bereits zahlreiche Verfahren bekannt. Neben den klassischen destillativen Verfahren, wie z.B. die fraktionierte Destillation oder die Wasserdampfdestillation, werden auch viele konventionelle Lösemittelverfahren angewandt.

In jüngster Zeit wurden auch zahlreiche Verfahren beschrieben, bei denen die Extraktion der Aromastoffe mit verdichteten Gasen insbesondere mit überkritischem Kohlendioxid durchgeführt wird. Beispielhaft sei an dieser Stelle auf die europäische Patentschrift EP 0 065 106 verwiesen, in der ein Verfahren zur Herstellung von konzentrierten Geruchs- und Geschmacksstoffextrakten durch Extraktion mit Kohlendioxid bei überkritischem Druck und unterkritischer Temperatur beschrieben wird. Diese Verfahren sind gegenwärtig insbesondere aufgrund ihrer schonenden Prozessbedingungen und der hohen Selektivität des Solvens von großem Interesse, da mit ihrer Hilfe qualitativ sehr hochwertige Aromen hergestellt werden können.

Bei diesem Verfahren können zur Abtrennung einer Fett-/Öl-Fraktion von einer Aromafraktion verschiedene Verfahrenswege beschritten werden. Zum einen bietet sich die fraktionierte Extraktion an, bei der die unterschiedlichen Inhaltsstoffe sequentiell durch unterschiedliche Verfahrensparameter, wie Druck, Temperatur oder Schleppmitteleinspeisung, aus dem Naturstoff extrahiert und getrennt gesammelt werden. Andererseits kommt die fraktionierte Abscheidung in Frage, bei der die verschiedenen Inhaltsstoffe zwar zunächst gemeinsam extrahiert, dann aber unter verschiedenen Bedingungen aus dem Gas abgeschieden werden.

Wie die Erfahrung zeigt, sind beide Verfahrensweisen doch oftmals mit Nachteilen behaftet: So gelingt es bei der fraktionierten Extraktion mit verdichtetem Kohlendioxid oftmals nicht, effektiv die Fette bzw. Öle von den Aromastoffen getrennt zu extrahieren, da beide Substanzklassen unter gleichen Bedingungen eine ähnliche Löslichkeit im Kohlendioxid zeigen. Auch bei der fraktionierten Abscheidung gilt, dass eine wirksame Abtrennung der Aromastoffe von Fett und Öl oft nur schlecht durchgeführt werden kann, weil sich die Löslichkeitsverhalten der beiden Substanzklassen im verdichtetem Kohlendioxid zu wenig unterscheiden. Zwar sind durch zusätzliche verfahrenstechnische Maßnahmen, wie z.B. das Vorlegen von Hilfsstoffen im Extraktabscheider, Verbesserungen zu erzielen, aber man erreicht oftmals keine befriedigende Anreicherung der Aromabestandteile, da diese immer noch im beträchtlichen Maße in einer lipophilen Matrix vorliegen. Eine Herstellung von Aromen mit einem niedrigen Fett- und/oder Öl-Gehalt, die insbesondere für die Aromatisierung von Instantgetränken oder Light-Produkten geeignet sind, ist deshalb mit derart gewonnenen Aromafraktionen oftmals nur sehr unzureichend möglich.

FR 2505868 beschreibt die Abtrennung von Ethanol sowie anderer Aromakomponenten aus alkoholischen Getränken. Die anderen Aromakomponenten werden dem Getränk wieder zugeführt. Es wird mit überkritischen Gasen, bevorzugt CO₂, extrahiert.

Man hat deshalb auch versucht, zur Gewinnung natürlicher Aromastoffe der reinen CO₂-Extraktion eine Extraktion mit flüssigem Propan und/oder Butan voranzustellen, um so die vor allem sensorisch sehr kritischen Öl- und Fettkomponenten selektiv abzutrennen und erst nachfolgend die eigentliche Aromaextraktion durchzuführen (DE-OS 44 40 644).

Bei diesem Verfahren, das in der ersten Stufe bei Temperaturen ≤ 70 °C und bei Drücken ≤ 50 Mpa durchgeführt wird, hat es sich aber bei der großtechnischen Realisierung herausgestellt, dass es ausschließlich mit Feststoffen und zudem nur bei Naturstoffen durchgeführt werden kann, die natürliche Aromastoffe in großer Konzentration enthalten. Die erfolgreiche Aromaextraktion flüssiger und halbflüssiger (viskoser) Ausgangsstoffe und solcher mit geringem Aromastoff-Gehalt ist mit diesem zweistufigen Verfahren jedoch nicht möglich.

Aus diesen Nachteilen des bekannten Standes der Technik hat sich für die vorliegende Erfindung deshalb die Aufgabe gestellt, ein Verfahren zur selektiven Abtrennung von flüchtigen Aromastoffen aus einphasigen, flüssigen und/oder hallflüssigen Ausgangsmaterialien mit einem Fett- und/oder Öl-Gehalt ≤ 20 Gew.-% bereitzustellen, das es ermöglicht, vor allem die leichtflüchtigen Aromastoffe aus dem Ausgangsmaterial in der Weise abzutrennen, dass vorrangig Aromastoffe in hochkonzentrierter und sensorisch hoher Qualität erhalten werden, auf der anderen Seite aber auch die Ausgangsmaterialien von flüchtigen Stoffen mit negativen Aromanoten zu entfernen, wobei das anzuwendende Verfahren insgesamt technisch einfach zu realisieren sein sollte und eine nachgeschaltete weitere Aufreinigung der abgetrennten Aromastoffe bzw. der entaromatisierten Ausgangsmaterialien entbehrlich wurde.

Gelöst wurde diese Aufgabe mit einem Verfahren zur selektiven Abtrennung von flüchtigen Aromastoffen aus einphasigen, flüssigen und /oder hallflüssigen Ausgangsmaterialen mit einem Fett- und/oder Öl-Gehalt ≤ 20 Gew.-%, welches dadurch gekennzeichnet ist, dass es mithilfe verdichteter.

Kohlenwasserstoffe, die ausgewählt sind aus Propan und/oder Butan, bei Temperaturen von ≤ 70 °C und Drücken von < 50 MPa, durchgeführt wird, wobei die flüchtigen Aromastoffe eine größere Flüchtigkeit als ethanol besitzen.

Vollkommen überraschend hat sich bei der Umsetzung des erfindungsgemäßen Verfahrens im großtechnischen Maßstab herausgestellt, dass trotz der bekannt selektiven Eigenschaften von Kohlenwasserstoffen gegenüber Fett- und/oder Öl-Bestandteilen die flüchtigen Aromastoffe selektiv aus dem (halb-)flüssigen Ausgangsmaterial erhalten werden und zudem die abgetrennten Aromastoffe in Qualitäten erhalten werden, die dem sogenannten WONF-Standard ("without other natural flavour") nahe kommen oder diesem sogar entsprechen. Mögliche öl- und/oder fettähnliche, aromafremde Komponenten werden bei diesem Abtrennungsverfahren vollkommen diskriminiert und bleiben selektiv im Ausgangsmaterial zurück. Andererseits war es überraschend, dass mit diesem einfachen Verfahren auch flüssige bzw. hallflüssige, also höher- und hochviskose Ausgangsmaterialien von Aromanoten befreit werden können, die einen negativen sensorischen Eindruck hinterlassen, wodurch das Ausgangsmaterial qualitativ aufgewertet werden kann.

Mit dem erfindungsgemäßen Verfahren ist es somit sowohl möglich, aus einem flüssigen oder halbflüssigen Ausgangsmaterial gewünschte Aromastoffe zu gewinnen als auch aus einem flüssigen oder halbflüssigen Ausgangsmaterial unerwünschte Aromastoffe abzutrennen.

Hinzu kommt, dass es mit diesem Verfahren auch möglich ist, flüchtige Aromastoffe aus alkoholhaltigen Flüssigkeiten selektiv abzutrennen, was insbesondere mit Wein und weinhaftigen Getränken sehr gut möglich ist, was vor allem deshalb nicht zu erwarten war, da Alkohole als lipophile Komponente von Kohlenwasserstoffen normalerweise sehr gut gelöst werden und somit eigentlich mit den Aromafraktionen abgetrennt werden müssten. Auch dies geschieht mit dem erfindungsgemäßen Verfahren wider Erwarten aber nicht: Die Alkoholkomponente verbleibt zu über 95 % im extrahierten Material, die gewonnenen Aromastoffe sind nach deren Abscheidung nahezu alkoholfrei. Die Gesamtheit der Vorteile konnte aus den bislang bekannten Erfahrungen aus dem Stand der Technik nicht erwartet werden.

Das erfindungsgemäße Verfahren wird mithilfe verdichtetem gasförmigem Propan und/oder Butan durchgeführt. Die verdichteten-Kohlenwasserstoffe besitzen eine Dichte, die größer als ihre jeweilige Dichte bei Normalbedingungen (T = 0°C, p = 101325 Pa), insbesondere mindestens 1 % größer, mehr bevorzugt mindesten 5 % größer, noch mehr bevorzugt mindestens 10 % größer und am meisten bevorzugt mindestens 50 % größer ist.

Besonders vorteilhaft kann das Verfahren gemäß vorliegender Erfindung bei Temperaturen von ≤ 70 °C, insbesondere ≤ 50 °C und ≥ 0 °C, insbesondere ≥ 10 °C und Drücken von < 40 Mpa, insbesondere < 30 Mpa und > 0,2 MPa durchgeführt worden, wobei es sich besonders günstig gezeigt hat, wenn die Temperatur auf 20 bis 35 °C und der Druck auf 0,5 bis 10 MPa eingestellt werden.

Als besonders geeignete Kohlenwasserstoffe haben sich verdichtetes Propan, z.B. n-Propan, iso-Propan, Butan, z.B. n-Butan, iso-Butan, tert-Butan, oder beliebige Mischungen daraus erwiesen, wobei die vorliegende Erfindung auch den Einsatz von Schleppmitteln wie Dimethylether oder Alkoholen vorsieht, die dann vorzugsweise in Anteilen von 0,5 bis 50 Gew.-%, vorzugsweise 2 bis 20 Gew.-% den Kohlenwasserstoffen zugesetzt werden. Insgesamt ist eine kontinuierliche Verfahrensdurchführung zu bevorzugen.

Aus der Reihe der in Frage kommenden Ausgangsmaterialien haben sich solche mit einem Flüssigkeitsgehalt ≥ 10 Gew.-%, bevorzugt ≥ 20 Gew.-% und insbesondere ≥ 30 Gew.-% und insbesondere Pasten, Pürees, Schlämmen, Press- und Filterrückstände sowie wasser- und/oder alkoholhaltige Flüssigkeiten als besonders geeignet gezeigt, wobei (Obst- und Gemüse-)Säfte und bei der Frucht- und Gemüseverarbeitung anfallende Wässer, wie Lutter- und Brüdenwässer, alkoholhaltige Getränke und Spirituosen, wie Wein, Rum und Whiskey sowie Edelbrände als besonders bevorzugt anzusehen sind.

Flüssige bzw. halbflüssige Ausgangsmaterialien gemäß der vorliegenden Erfindung haben vorzugsweise eine dynamische Viskosität von mindestens 0,01, insbesondere mindestens 0,1 und mehr bevorzugt mindestens 0,5 und bis zu 100000, insbesondere bis zu 10000 und mehr bevorzugt bis zu 1000 mPa·s bei 18 °C.

Einphasig, flüssig bzw. hallflüssig bedeutet, dass die Ausgangsmaterialien nur eine einzige flüssige Phase aufweisen, in der gegebenenfalls Feststoffe dispergiert oder enthalten sein können

Hinsichtlich der abzutrennenden flüchtigen Aromastoffe umfasst die vorliegende Erfindung insbesondere natürliche, naturidentische und/oder synthetische Aromastoffe. Als besonders bevorzugt sind in diesem Zusammenhang Aromastoffe anzusehen, die in flüssiger oder pastöser Form oder als Pulver erhalten werden.

Die flüchtigen Aromastoffe, die mit dem erfindungsgemäßen Verfahren abgetrennt werden können, weisen eine Flüchtigkeit auf, die größer ist als die von Ethanol. Der Dampfdruck der flüchtigen Aromastoffe bei 20 °C ist vorzugsweise ≥ 25 mbar, insbesondere ≥100 mbar, mehr bevorzugt ≥ 200 mbar, vorzugsweise ≥ 300 mbar und noch mehr bevorzugt ≥ 400 mbar.

Die vorliegende Erfindung berücksichtigt auch eine spezielle Verfahrensvariante, bei der die abgetrennten flüchtigen Aromastoffe abschließend gelöst werden, was vorzugsweise in Alkohol geschieht.

Wie bereits erwähnt, ist es mit dem Verfahren gemäß Erfindung nicht nur möglich, flüchtige Aromastoffe selektiv als werthaltiges Produkt abzutrennen, sondern auch flüchtige Aromastoffe mit negativer Aromanote aus den Ausgangsmaterialien gezielt zu entfernen. Aus diesem Grund sieht die vorliegende Erfindung auch vor, dass das Ausgangsmaterial in entaromatisiertem und/oder in desodoriertem Zustand und damit qualitativ aufgewertet erhalten wird. Letzteres ist insbesondere mit entsprechend geeigneten halbflüssgen Schmelzen gut durchführbar, deren Anteil an Fett-/Öl-haltigen Bestandteilen auf ≤ 20 Gew.-% eingestellt worden ist.

Bezüglich der Fahrweise berücksichtigt die vorliegende Erfindung, dass das beanspruchte Verfahren in einer Trennkolonne, vorzugsweise nach dem Gegenstromprinzip, durchgeführt wird oder aber in einem anderen Druckbehälter.

Zur Abtrennung der flüchtigen Aromastoffe kann gemäß einer weiteren bevorzugten Verfahrensvariante die Trennkolonne mit einem Abscheider gekoppelt sein und die extrahierten Aromastoffe können vorzugsweise durch Druckabsenkung und/oder Temperaturerhöhung abgetrennt werden.

Schließlich sieht die vorliegende Erfindung auch vor, dass die zur Abtrennung der flüchtigen Aromastoffe eingesetzten Kohlenwasserstoffe im Kreislauf geführt werden.

Zusammenfassend bleibt festzuhalten, dass mit dem erfindungsgemäßen Verfahren eine Methode vorliegt, um selektiv flüchtige Aromastoffe aus halbflüssigen oder flüssigen Ausgangsmaterialien abzutrennen, wobei die möglicherweise im Ausgangsmaterial enthaltenen öl- und/oder fettartigen Komponenten von den eingesetzten verdichteten Kohlenwasserstoffen nicht mitabgetrennt werden, sondern im Ausgangsmaterial verbleiben. Auf diese Weise werden zum einen Aromastoffe in konzentrierter und qualitativ sehr hoch stehender Form erhalten, auf der anderen Seite ist es aber auch möglich, die Ausgangsmaterialien von als negativ empfundenen Aromastoffen zu befreien. In jedem Fall erhält man hochwertige Produkte, die insbesondere in der Lebensmittel-, Pharma- und Kosmetikindustrie eingesetzt werden können.

Interessant sind vor allem die sich mit dem erfindungsgemäßen Verfahren ergebenden Möglichkeiten:

So können nun bspw. typische flüchtige Aromastoffe aus alkoholhaltigen Getränken wie Wein oder Bier zunächst abgetrennt werden, die verbliebene Flüssigkeit dann durch übliche Verfahren vom Alkohol befreit und schließlich der entalkoholisierten Flüssigkeit die typischen Aromastoffe wieder zugesetzt werden.

Möglich ist aber auch die Zubereitung von alkoholfreien Instant-Produkten, indem aus Wein oder Sekt die Aromastoffe abgetrennt und diese dann mit Aromastoffen, die bspw. aus Orangensaft erhalten wurden gemeinsam mit einem Brausepulver vermischt werden. Auf diese Weise ist ein schnelllösliches und alkoholfreies Erfrischungsgetränk mit dem typischen Sekt-/Orangenaroma zugänglich.

Schließlich können selektiv Mischaromen aus Reinigungs- und Spülwässern gewonnen werden, die bei der Reinigung von Reifungs- und Lagerfässern, von Getränkeleitungen und -abfüllanlagen sowie beim Waschen und Dämpfen von Obst und Gemüse anfallen.

Das vorliegende Verfahren zur selektiven Abtrennung von flüchtigen Aromastoffen aus einphasigen, flüssigen bzw. hallflüssigen Ausgangsmaterialien mit einem Fett- und/oder Öl-Gehalt ≤ 20 Gew.-% wird bei Temperaturen von ≤ 70 °C und Drücken von < 50 MPa unter Einsatz von verdichtetem, Propan, Butan oder beliebigen Mischungen daraus durchgeführt. Dabei kommen als Ausgangsmaterialien Pasten und Pürees mit einem Flüssigkeitsgehalt ≥ 10 Gew.-% sowie wasser- und/oder alkoholhaltige Flüssigkeiten, wie insbesondere Säfte und bei der Saftherstellung anfallende Wässer aber auch alkoholhaltige Getränke und Spirituosen, in Frage. Die auf diese Weise insbesondere abgetrennten natürlichen, naturidentischen und/oder synthetischen Aromastoffe werden in sensorisch hochstehenden Qualitäten erhalten. Zum anderen ist es mit diesem Verfahren auch möglich, Ausgangsmaterialien von ungewünschten Aromastoffen zu befreien, also zu desodorieren.

Die nachfolgenden Beispiele belegen die beschriebenen Vorteile des erfindungsgemäßen Verfahrens zur selektiven Abtrennung von flüchtigen Aromastoffen.

### Beispiele

1. Abtrennung eines Aromas von schwarzen Johannisbeeren aus dem Lutterwasser von schwarzer Johannisbeere
   10 kg Lutterwasser aus der Konzentratherstellung von schwarzem Johannisbeersaft wurden bei 3 MPa (30 bar) und 30 °C mit insgesamt 10 kg flüssigem Propan in der Kolonne im Gegenstrom extrahiert. Der Extrakt wurde nach Druckabsenkung bei 0,8 MPa (8 bar) und 46 °C abgeschieden, wodurch 100 mg eines öligen, braunen Extraktes erhalten wurden. Dieser Extrakt wurde in 100 g absolutem Ethanol gelöst. Die Sensorik des gelösten Extrakts ergab einen fruchttypischen Geruch, der dem Aroma des schwarzen Johannisbeersafts identisch ist:
   Ergebnis der Aromabeurteilung
   Ausgangsmaterial: Lutterwasser (typischer Geruch)
   Lutterwasser entaromatisiert: milchsauer, nicht identifizierbar und nicht definierbar
   Extrakt 1000-fach verdünnt: Anfangs undefinierbar, Richtung schwerholzig-grün, nach 2 bis 3 Minuten signifikantes, säuerliches Aroma, nach längerer Zeit fruchtig leicht, Geruch fruchttypisch, Aroma mit Saft identisch
2. Abtrennung eines Erdbeeraromas aus Erdbeersaft
   5 kg Erdbeersaft mit dumpfer Kochnote und schwerer Süße (schlechte Qualität) wurden bei 3,5 MPa (35 bar) und 30 °C mit insgesamt 3,5 kg flüssigem Propan in der Kolonne im Gegenstrom extrahiert. Der Extrakt wurde nach Druckabsenkung bei 0,6 MPa (6 bar) und 48 °C abgeschieden, wodurch 170 mg eines farblosen, klaren und öligen Extrakt erhalten wurden. Dieser Extrakt wurde in 10 g absolutem Ethanol aufgenommen. Die sensorische Beurteilung ergab ein typisches Erdbeeraroma ohne schwere Süße und ohne Kochgeschmack. Das Aroma ist sehr lang anhaltend, intensiver und reiner als der Erdbeersaft
   Ergebnis der Aromabeurteilung:
   Ausgangsmaterial: überlagerter Saft: dumpf, Kochnote, schwer süßlich Saft entaromatisiert: milchsauer, mit leichtem Erdbeergeruch
   Extrakt 50-fach verdünnt: anfänglich undefinierbar, dann süßlich fruchtig, leicht holzig (grün), nach 3 bis 4 Minuten mehr und mehr fruchttypisch ohne Kochgeschmack, nach 5 bis 6 Minuten typisch Erdbeere ohne schwere Süße, Aroma sehr lang anhaltend; Aroma besser als der Erdbeersaft
3. Abtrennung eines Weinaromas aus Rotwein
   8 kg Rotwein wurden bei 3 MPa (30 bar) und 25 °C mit 5 kg flüssigem Propan in der Kolonne im Gegenstrom extrahiert. Der Extrakt wurde nach Druckabsenkung bei 1 MPa (10 bar) und 48 °C abgeschieden, wodurch man 3,8 g eines dünnflüssigen, blassgrünen Öls erhielt. Dieser Extrakt wurde in 100 g absolutem Ethanol gelöst. Die Sensorik des gelösten Extrakts war sehr intensiv und reintönig. Die Zuordnung des Aromas ist eindeutig.
   Ergebnis der Aromabeurteilung:
   Ausgangsmaterial: Rotwein aus Spanien (Navarra)
   Extrakt 25-fach verdünnt: sehr intensiv und reintönig identifiziert, Flaschenabfüllung (typischer Geruch nach Abfüllanlage)

## Patentansprüche

1. Verfahren zur selektiven Abtrennung von flüchtigen Aromastoffen aus einphasigen, flüssigen und/oder hallflüssigen Ausgangsmaterialen mit einem Fett- und/oder Öl-Gehalt ≤ 20 Gew.-%, **dadurch gekennzeichnet, dass** es mit Hilfe verdichteter Kohlenwasserstoffe, die ausgewählt sind aus Propan und/oder Butan, bei Temperaturen von ≤ 70 °C und Drücken von < 50 MPa, durchgeführt wird, wobei die flüchtigen Aromastoffe eine größere Flüchtigkeit als Ethanol besitzen.

2. Verfahren nach Anspruch 1, **dadurch gekennzeichnet, dass** die Temperatur auf 20 bis 35 °C und der Druck auf 0,5 bis 10 MPa eingestellt werden.

3. Verfahren nach einem der Ansprüche 1 oder 2, **dadurch gekennzeichnet, dass** dem verdichteten Kohlenwasserstoff Schleppmittel wie Dimethylether oder Alkohole, vorzugsweise in Anteilen von 0,5 bis 50 Gew.-%, zugesetzt werden.

4. Verfahren nach einem der Ansprüche 1 bis 3, **dadurch gekennzeichnet, dass** es kontinuierlich durchgeführt wird.

5. Verfahren nach einem der Ansprüche 1 bis 4, **dadurch gekennzeichnet, dass** Ausgangsmaterialien mit einem Flüssigkeits-Gehalt ≥ 10 Gew.-% und insbesondere Pasten, Pürees, Schlämmen, Press- und Filterrückstände sowie wasser- und/oder alkoholhaltige Flüssigkeiten verwendet werden.

6. Verfahren nach Anspruch 5, **dadurch gekennzeichnet, dass** Säfte und bei der Frucht- und Gemüseverarbeitung anfallende Wässer, wie Lutter- und Brüdenwässer, alkoholhaltige Getränke und Spirituosen, wie Wein, Bier und Sekt sowie Edelbrände eingesetzt werden.

7. Verfahren nach einem der Ansprüche 1 bis 6, **dadurch gekennzeichnet, dass** natürliche, naturidentische und/oder synthetische Aromastoffe erhalten werden.

8. Verfahren nach einem der Ansprüche 1 bis 7, **dadurch gekennzeichnet, dass** die Aromastoffe in flüssiger oder pastöser Form oder als Pulver erhalten werden.

9. Verfahren nach einem der Ansprüche 1 bis 8, **dadurch gekennzeichnet, dass** die Aromastoffe abschließend gelöst werden, vorzugsweise in Alkohol.

10. Verfahren nach einem der Ansprüche 1 bis 9, **dadurch gekennzeichnet, dass** das Ausgangsmaterial in entaromatisiertem und/oder desodoriertem Zustand erhalten wird.

11. Verfahren nach einem der Ansprüche 1 bis 10, **dadurch gekennzeichnet, dass** es in einer Trennkolonne, vorzugsweise nach dem Gegenstromprinzip, oder in einem anderen Druckbehälter durchgeführt wird.

12. Verfahren nach Anspruch 11, **dadurch gekennzeichnet, dass** die Trennkolonne mit einem Abscheider gekoppelt ist und die extrahierten Aromastoffe vorzugsweise durch Druckabsenkung und/oder Temperaturerhöhung abgetrennt werden.

13. Verfahren nach einem der Ansprüche 11 oder 12, **dadurch gekennzeichnet, dass** die Kohlenwasserstoffe im Kreislauf geführt werden.

## Claims

1. Method for the selective separation of volatile flavorings from one-phase liquid and/or semiliquid starting materials having a fat content and/or oil content ≤ 20% by weight, **characterized in that** it is carried out using compressed hydrocarbons selected from propane and/or butane, at temperatures of ≤ 70°C and at pressures of < 50 MPa, wherein the volatile flavorings have a greater volatility than ethanol.

2. Method according to Claim 2, **characterized in that** the temperature is set at 20 to 35°C and the pressure at 0.5 to 10 MPa.

3. Method according to one of Claims 1 and 2, **characterized in that** entrainers such as dimethyl ether or alcohols are added to the compressed hydrocarbon, preferably in amounts of 0.5 to 50% by weight.

4. Method according to one of Claims 1 to 3, **characterized in that** it is carried out continuously.

5. Method according to one of Claims 1 to 4, **characterized in that** starting materials having a liquid content ≥ 10% by weight, and in particular pastes, purees, sludges, pressing residues and filtration residues, and also aqueous and/or alcoholic liquids are used.

6. Method according to Claim 5, **characterized in that** juices and waters produced in fruit and vegetable processing, such as distillation first-runnings water and condenser water, alcoholic drinks and spirits, such as wine, beer and sparkling wine and also fruit spirits are used.

7. Method according to one of Claims 1 to 6, **characterized in that** natural, nature-identical and/or synthetic flavorings are obtained.

8. Method according to one of Claims 1 to 7, **characterized in that** the flavorings are obtained in liquid or pasty form, or as powder.

9. Method according to one of Claims 1 to 8, **characterized in that** the flavorings are finally dissolved, preferably in alcohol.

10. Method according to one of Claims 1 to 9, **characterized in that** the starting material is obtained in dearomatized and/or deodorized state.

11. Method according to one of Claims 1 to 10, **characterized in that** it is carried out in a separation column, preferably by the countercurrent flow principle, or in another pressure vessel.

12. Method according to Claim 11, **characterized in that** the separation column is coupled to a separator, and the extracted flavorings are preferably separated by pressure reduction and/or temperature rise.

13. Method according to one of Claims 11 or 12, **characterized in that** the hydrocarbons are recirculated.

## Revendications

1. Procédé pour la séparation sélective d'arômes volatils à partir de produits de départ liquides et/ou semi-liquides monophasiques ayant une teneur en graisse et/ou en huile ≤ 20 % en poids, **caractérisé en ce qu'**on l'effectue à l'aide d'hydrocarbures condensés qui sont choisis parmi le propane et/ou le butane, à des températures de ≤ 70 °C et sous des pressions de < 50 MPa, les arômes volatils ayant une plus grande volatilité que l'éthanol.

2. Procédé selon la revendication 1, **caractérisée en ce que** la température est réglée à 20-35 °C et la pression à 0,5-10 MPa.

3. Procédé selon la revendication 1 ou 2, **caractérisé en ce qu'**on ajoute à l'hydrocarbure condensé des agents d'entraînement tels que l'éther diméthylique ou des alcools, de préférence en proportions de 0,5 à 50 % en poids.

4. Procédé selon l'une quelconque des revendications 1 à 3, **caractérisé en ce qu'**il est effectué en continu.

5. Procédé selon l'une quelconque des revendications 1 à 4, **caractérisé en ce qu'**on utilise des produits de départ ayant une teneur en liquide ≥ 10 % en poids et en particulier des pâtes, des purées, des suspensions, des résidus de presse ou de filtre, ainsi que des liquides aqueux et/ou alcooliques.

6. Procédé selon la revendication 5, **caractérisé en ce qu'**on utilise des jus et de l'eau apparaissant dans le traitement de fruits et de légumes, telle que de l'eau de blanquette et de condensation, des boissons alcooliques et des spiritueux, tels que le vin, la bière et le vin mousseux ainsi que des eaux-de-vie.

7. Procédé selon l'une quelconque des revendications 1 à 6, **caractérisé en ce qu'**on obtient des arômes naturels, des arômes identiques aux arômes naturels et/ou des arômes synthétiques.

8. Procédé selon l'une quelconque des revendications 1 à 7, **caractérisé en ce qu'**on obtient les arômes sous forme liquide ou pâteuse ou sous forme de poudre.

9. Procédé selon l'une quelconque des revendications 1 à 8, **caractérisé en ce que** les arômes sont ensuite dissous, de préférence dans de l'alcool.

10. Procédé selon l'une quelconque des revendications 1 à 9, **caractérisé en ce que** le produit de départ est obtenu à l'état désaromatisé et/ou désodorisé.

11. Procédé selon l'une quelconque des revendications 1 à 10, **caractérisé en ce qu'**il est mis en oeuvre dans une colonne de séparation, de préférence selon le principe à contre-courant, ou dans un autre récipient tenant la pression.

12. Procédé selon la revendication 11, **caractérisé en ce que** la colonne de séparation est couplée à un séparateur et les arômes extraits sont séparés de préférence par abaissement de la pression et/ou élévation de la température.

13. Procédé selon la revendication 11 ou 12, **caractérisé en ce que** les hydrocarbures sont recyclés.
